(19) Europäisches Patentamt
European Patent Office
Office européen des brevets

(11) **EP 4 697 448 A1**

(12) **EUROPEAN PATENT APPLICATION**
published in accordance with Art. 153(4) EPC

(43) Date of publication:
**18.02.2026 Bulletin 2026/08**

(21) Application number: **23937260.0**

(22) Date of filing: **09.11.2023**

(51) International Patent Classification (IPC):
**H01M 10/613** *(2014.01)*    **H01M 10/615** *(2014.01)*
**H01M 10/6556** *(2014.01)*    **H01M 10/6569** *(2014.01)*

(52) Cooperative Patent Classification (CPC):
**Y02E 60/10**

(86) International application number:
**PCT/CN2023/130623**

(87) International publication number:
**WO 2024/234585 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.05.2023  CN 202310551651**

(71) Applicant: **Contemporary Amperex Technology Co., Limited**
**Ningde, Fujian 352100 (CN)**

(72) Inventors:
• **LI, Jinkui**
  **Ningde, Fujian 352100 (CN)**

• **HUANG, Xiaoteng**
  **Ningde, Fujian 352100 (CN)**
• **LI, Qing**
  **Ningde, Fujian 352100 (CN)**
• **YE, Weida**
  **Ningde, Fujian 352100 (CN)**
• **OUYANG, Shijie**
  **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **HEAT EXCHANGE SYSTEM, BATTERY AND CONTROL METHOD**

(57)    A heat exchange system, a battery and a control method, which relate to the field of batteries. The heat exchange system comprises a thermal management component, a throttling device, a first temperature sensor and a pressure sensor, wherein the thermal management component comprises a first medium inlet and a medium outlet; the throttling device is in communication with the first medium inlet; the first temperature sensor is used for measuring the temperature of a first heat exchange medium at the medium outlet; and the pressure sensor is used for measuring the pressure of the first heat exchange medium at the medium outlet. The throttling device responds to the first temperature sensor and the pressure sensor, so as to regulate a flow entering the first medium inlet, such that the first heat exchange medium in the thermal management component is in a gas-liquid mixed state. By making a first heat exchange medium in a thermal management component be in a gas-liquid mixed state, when the first heat exchange medium exchanges heat with a workpiece, the first heat exchange medium undergoes a phase change without a change in temperature. Thus, the temperature uniformity of the thermal management component is better, and the thermal management effect on the workpiece is better, thereby improving the reliability of the workpiece.

FIG. 3

## Description

### CROSS-REFERENCE TO RELATED APPLICATIONS

The present application claims priority to Chinese Patent Application No. 2023105516519, filed on May 16, 2023 and entitled "HEAT EXCHANGE SYSTEM, BATTERY AND CONTROL METHOD", which is incorporated herein by reference in its entirety.

### TECHNICAL FIELD

The present application relates to the field of batteries, and specifically relates to a heat exchange system, a battery, and a control method.

### BACKGROUND

Batteries are widely applied to the field of new energy, for example, electric vehicles and new energy vehicles. New energy vehicles and electric vehicles have become a new development trend of the automobile industry. The development of a battery technology needs to consider design factors in many aspects at the same time, for example, performance parameters such as battery life, energy density, discharging capacity, and charging and discharging rate. In addition, the reliability of batteries also needs to be considered. However, the reliability of the current batteries is low.

### SUMMARY

An objective of embodiments of the present application is to provide a heat exchange system, a battery, and a control method, to solve the problem of low reliability of batteries in the prior art.

According to a first aspect, an embodiment of the present application provides a heat exchange system. The heat exchange system includes a thermal management component, a throttling apparatus, a first temperature sensor, and a pressure sensor. The thermal management component includes a first medium inlet and a medium outlet. The throttling apparatus is communicated with the first medium inlet. The first temperature sensor is configured to detect the temperature of a first heat exchange medium at the medium outlet. The pressure sensor is configured to detect the pressure of the first heat exchange medium at the medium outlet. The throttling apparatus regulates the flow rate entering the first medium inlet in response to the first temperature sensor and the pressure sensor, to make the first heat exchange medium in the thermal management component in a gas-liquid mixed state.

In the foregoing technical solution, the first temperature sensor is arranged for detecting the temperature of the first heat exchange medium at the medium outlet, the pressure sensor is arranged for detecting the pressure of the first heat exchange medium at the medium outlet, and the state of the first heat exchange medium at the medium outlet is determined according to the temperature and pressure of the first heat exchange medium at the medium outlet. The throttling apparatus is regulated according to the state of the first heat exchange medium at the medium outlet, to increase or decrease the flow rate entering the first medium inlet, to make the first heat exchange medium in the thermal management component in a gas-liquid mixed state. In this way, when the first heat exchange medium exchanges heat with a workpiece, the first heat exchange medium in a liquid state may be vaporized into a gas. Before and after the vaporization, the first heat exchange medium changes in phase but not in temperature. Or, the first heat exchange medium in a gas state may be liquefied into a liquid. Before and after the liquefaction, the first heat exchange medium changes in phase but not in temperature. The temperature of the first heat exchange medium in the thermal management component remains unchanged provided that the first heat exchange medium in the thermal management component is in the gas-liquid mixed state. Thus, the thermal management component has good temperature uniformity and good thermal management effect on the workpiece, helps full play of the performance of the workpiece, and improves the reliability of the workpiece.

As an optional technical solution of the embodiment of the present application, the heat exchange system further includes a compressor and a condenser. The compressor, the condenser, the throttling apparatus, and the thermal management component form a circulation loop.

In the foregoing technical solution, the first heat exchange medium flowing out from the medium outlet is compressed by the compressor into a high-temperature and high-pressure gas. The high-temperature and high-pressure gas passes through the condenser and is then cooled into a high-temperature and high-pressure subcooled liquid, and the high-temperature and high-pressure subcooled liquid passes through the throttling apparatus and then becomes a low-pressure gas-liquid mixed state. The first heat exchange medium in the low-pressure gas-liquid mixed state enters, through the first medium inlet, the heat exchanger to exchange heat with the workpiece, to achieve thermal management of the workpiece. The circulation loop is formed by the compressor, the condenser, the throttling apparatus, and the thermal management component to achieve circulation flow of the first heat exchange medium, thereby helping reduce the consumption of the first heat exchange medium.

As an optional technical solution of the embodiment of the present application, the heat exchange system includes a heating system. The heating system is configured to heat the first heat exchange medium flowing out from the medium outlet.

In the foregoing technical solution, the first heat exchange medium flowing out from the medium outlet is in the gas-liquid mixed state or a saturated gas state. The first heat exchange medium in the gas-liquid mixed state contains a liquid, and the first heat exchange medium in the saturated gas state may be partially liquefied into a liquid when entering the compressor. The first heat exchange medium, whether in the gas-liquid mixed state or the saturated gas state, may cause liquid impact on the compressor when entering the compressor, causing damage to the compressor. The heating system is arranged for heating the first heat exchange medium flowing out from the medium outlet, so that the first heat exchange medium becomes a superheated gas, thereby reducing the risk of liquid impact on the compressor when the first heat exchange medium enters the compressor.

As an optional technical solution of the embodiment of the present application, the condenser is communicated with the throttling apparatus by a first pipeline, and the thermal management component is communicated with the compressor by a second pipeline. The heating system includes a first heat exchanger. The first heat exchanger is connected to the first pipeline and the second pipeline. The first heat exchanger is configured to achieve heat exchange between the first heat exchange medium in the first pipeline and the first heat exchange medium in the second pipeline.

In the foregoing technical solution, the first heat exchange medium in the first pipeline is a high-temperature and high-pressure subcooled liquid whose temperature is higher than the temperature of the first heat exchange medium flowing out from the medium outlet. By heating the first heat exchange medium flowing out from the medium outlet with the first heat exchange medium in the first pipeline, the first heat exchange medium flowing out from the medium outlet can be heated into a superheated gas, and further the temperature of the first heat exchange medium entering the throttling apparatus can be reduced, so that subcooling is increased, and the cooling capacity of the heat exchange system is increased.

As an optional technical solution of the embodiment of the present application, the thermal management component is communicated with the compressor by a second pipeline. The heating system includes a liquid supply system and a first heat exchanger. The liquid supply system is configured to supply a second heat exchange medium to the first heat exchanger. The first heat exchanger is connected to the second pipeline. The first heat exchanger is configured to achieve heat exchange between the first heat exchange medium in the second pipeline and the second heat exchange medium.

In the foregoing technical solution, the liquid supply system supplies the second heat exchange medium to the first heat exchanger, and the first heat exchange medium in the second pipeline is heated by the second heat exchange medium, so that the first heat exchange medium becomes a superheated gas, thereby reducing the risk of liquid impact on the compressor when the first heat exchange medium enters the compressor.

In a case that the liquid supply system supplies the second heat exchange medium to the first heat exchanger, the flow rate of the second heat exchange medium entering the first heat exchanger may be regulated as required, and also the temperature of the second heat exchange medium may be regulated as required, which is more flexible.

As an optional technical solution of the embodiment of the present application, the liquid supply system includes a medium storage and a driver. The medium storage is configured to store the second heat exchange medium. The medium storage, the driver, and the first heat exchanger form a circulation loop.

In the foregoing technical solution, the driver can drive the second heat exchange medium stored in the medium storage to the first heat exchanger, so that the first heat exchange medium in the second pipeline is heated by the second heat exchange medium in the first heat exchanger. The circulation loop is formed by the medium storage, the driver, and the first heat exchanger, which helps reduce the consumption of the second heat exchange medium.

As an optional technical solution of the embodiment of the present application, the heating system further includes a second heat exchanger. The second heat exchanger, the liquid supply system, and the first heat exchanger form a circulation loop. The second heat exchanger is configured to heat the second heat exchange medium.

In the foregoing technical solution, the second heat exchange medium in the second heat exchanger can exchange heat with other systems, to recover heat from the systems, and the first heat exchange medium in the second pipeline can be heated using the recovered heat, which help reduce the energy consumption of the heat exchange system and reduce the production costs.

As an optional technical solution of the embodiment of the present application, the compressor includes a second medium inlet. The second medium inlet is communicated with the medium outlet. The heat exchange system further includes a second temperature sensor. The second temperature sensor is configured to detect the temperature of the first heat exchange medium at the second medium inlet. The liquid supply system regulates the flow rate of the second heat exchange medium passing through the first heat exchanger in response to the first temperature sensor and the second temperature sensor.

In the foregoing technical solution, the second temperature sensor is arranged for detecting the temperature at the second medium inlet, and whether the superheat of the first heat exchange medium at the second medium inlet meets a requirement is determined according to the temperature detected by the first temperature sensor and the temperature detected by the second temperature sensor. When the superheat of the first heat exchange medium at the second medium inlet does not meet a requirement, the liquid supply system may increase the flow rate of the second heat exchange medium passing through the first heat exchanger, to further increase the temperature of the first heat exchange medium in the second pipeline to a higher temperature.

As an optional technical solution of the embodiment of the present application, the compressor includes a second medium inlet. The second medium inlet is communicated with the medium outlet. The heat exchange system further includes a second temperature sensor. The second temperature sensor is configured to detect the temperature of the first heat exchange medium at the second medium inlet. The throttling apparatus is in response to the second temperature sensor.

In the foregoing technical solution, the second temperature sensor is arranged for detecting the temperature at the second medium inlet, and whether the superheat of the first heat exchange medium at the second medium inlet meets a requirement is determined according to the temperature detected by the first temperature sensor and the temperature detected by the second temperature sensor. When the superheat of the first heat exchange medium at the second medium inlet does not meet a requirement, it indicates that the flow rate entering the first medium inlet is excessively high, and the flow rate entering the first medium inlet may be slightly reduced by the throttling apparatus.

According to a second aspect, an embodiment of the present application further provides a battery. The battery includes a battery cell, a box body, and the aforementioned heat exchange system. The box body accommodates the battery cell. The thermal management component is accommodated in the box body, and the thermal management component is configured to manage the temperature of the battery cells.

According to a third aspect, an embodiment of the present application further provides a control method. The control method is based on the aforementioned heat exchange system, and the control method includes: when $T_1 > T_3$, regulating the throttling apparatus to increase the flow rate entering the first medium inlet, until $T_1 \leq T_3$. $T_1$ is the temperature detected by the first temperature sensor. $T_3$ is a corresponding saturation temperature of the first heat exchange medium at the pressure detected by the pressure sensor.

In the foregoing technical solution, when the temperature detected by the first temperature sensor is greater than the corresponding saturation temperature of the first heat exchange medium at the pressure detected by the pressure sensor, it indicates that the first heat exchange medium at the medium outlet is thoroughly in a gas state, and has already absorbed part of heat. Therefore, the throttling apparatus may be regulated to increase the flow rate entering the first medium inlet, until the temperature detected by the first temperature sensor is less than or equal to the corresponding saturation temperature of the first heat exchange medium at the pressure detected by the pressure sensor. When the temperature detected by the first temperature sensor is less than or equal to the corresponding saturation temperature of the first heat exchange medium at the pressure detected by the pressure sensor, it indicates that the first heat exchange medium at the medium outlet is in a gas-liquid mixed state or just a saturated gas state, and the temperature of the first heat exchange medium at each position in the thermal management component is equal.

As an optional technical solution of the embodiment of the present application, the heat exchange system further includes the compressor and the condenser. The compressor, the condenser, the throttling apparatus, and the thermal management component form a circulation loop. The heat exchange system includes the heating system. The heating system is configured to heat the first heat exchange medium flowing out from the medium outlet. The compressor includes the second medium inlet. The second medium inlet is communicated with the medium outlet. The heat exchange system further includes the second temperature sensor. The second temperature sensor is configured to detect the temperature of the first heat exchange medium at the second medium inlet. The control method includes: when $T_1 \leq T_3$ and $T_2 - T_1 \leq T$, regulating the throttling apparatus to decrease the flow rate entering the first medium inlet, until $T_1 \leq T_3$ and $T_2 - T_1 > T$. $T_2$ is the temperature detected by the second temperature sensor. T is safe superheat at an inlet of the compressor.

In the foregoing technical solution, when $T_1 \leq T_3$ and $T_2 - T_1 \leq T$, it indicates that the first heat exchange medium in the thermal management component is thoroughly in a gas-liquid mixed state. However, the superheat of the first heat exchange medium at the second medium inlet does not meet a requirement, and it indicates that the flow rate entering the first medium inlet is excessively high, and the flow rate entering the first medium inlet may be slightly reduced by the throttling apparatus until $T_1 \leq T_3$ and $T_2 - T_1 > T$. That is, the first heat exchange medium in the thermal management component is thoroughly in the gas-liquid mixed state, and the superheat of the first heat exchange medium at the second medium inlet meets a requirement.

As an optional technical solution of the embodiment of the present application, the heat exchange system further includes the compressor and the condenser. The compressor, the condenser, the throttling apparatus, and the thermal management component form a circulation loop. The heat exchange system includes the heating system. The heating system is configured to heat the first heat exchange medium flowing out from the medium outlet. The thermal management component is communicated with the compressor by the second pipeline. The heating system includes the liquid supply system and the first heat exchanger. The liquid supply system is configured to supply the second heat exchange medium to the first heat exchanger. The first heat exchanger is connected to the second pipeline. The first heat exchanger is configured to achieve heat exchange between the first heat exchange medium in the second pipeline and the second heat exchange medium. The compressor includes the second medium inlet. The second medium inlet is communicated with the medium outlet. The heat exchange system further includes the second temperature sensor. The second temperature sensor is configured to detect the temperature of the first heat exchange medium at the second medium inlet. The control method includes: when $T_2-T_1 \leq T$, regulating the liquid supply system to increase the flow rate of the second heat exchange medium supplied to the first heat exchanger, until $T_2-T_1 > T$. $T_2$ is the temperature detected by the second temperature sensor. T is safe superheat at an inlet of the compressor.

In the foregoing technical solution, when $T_2-T_1 \leq T$, it indicates that the superheat of the first heat exchange medium at the second medium inlet does not meet a requirement, and the liquid supply system may increase the flow rate of the second heat exchange medium passing through the first heat exchanger, to increase the temperature of the first heat exchange medium in the second pipeline to a higher temperature, until $T_2-T_1 > T$. That is, the superheat of the first heat exchange medium at the second medium inlet meets a requirement.

As an optional technical solution of the embodiment of the present application, the liquid supply system includes the medium storage and the driver. The medium storage is configured to store the second heat exchange medium. The medium storage, the driver, and the first heat exchanger form a circulation loop. The control method includes: when $T_2-T_1 \leq T$, increasing the power of the driver to increase the flow rate of the second heat exchange medium supplied to the first heat exchanger.

In the foregoing technical solution, the flow rate of the second heat exchange medium supplied to the first heat exchanger may be increased by increasing the power of the driver, so that the superheat of the first heat exchange medium at the second medium inlet meets a requirement, which is simple and convenient in regulation.

As an optional technical solution of the embodiment of the present application, the control method includes: when $T_2-T_1 > T+\Delta T$, regulating the liquid supply system to decrease the flow rate of the second heat exchange medium supplied to the first heat exchanger, until $T < T_2-T_1 < T+\Delta T$, where $\Delta T=6°C$.

In the foregoing technical solution, when $T_2-T_1 > T+\Delta T$, it indicates that the superheat of the first heat exchange medium at the second medium inlet is excessively high, and consequently, the energy consumption of the heat exchange system increases. The liquid supply system is regulated to reduce the flow rate of the second heat exchange medium supplied to the first heat exchanger, to control the superheat of the first heat exchange medium at the second medium inlet to be in a preset range, thereby reducing the energy consumption of the heat exchange system and reducing the production costs.

**BRIEF DESCRIPTION OF THE DRAWINGS**

To describe the technical solutions of the embodiments of the present application more clearly, the following briefly introduces the accompanying drawings required for describing the embodiments. It should be understood that, the following accompanying drawings illustrate only some embodiments of the present application, and therefore should not be construed as limitations to the scope. Those of ordinary skill in the art may still derive other drawings from these accompanying drawings without creative efforts.

FIG. 1 is an exploded view of a battery according to some embodiments of the present application;
FIG. 2 is a schematic diagram of a heat exchange system according to some embodiments of the present application;
FIG. 3 is a schematic diagram of a heat exchange system according to further embodiments of the present application;
FIG. 4 is a schematic diagram of a heat exchange system according to still some other embodiments of the present application;
FIG. 5 is a schematic diagram of a heat exchange system according to still further embodiments of the present application;
FIG. 6 is a schematic diagram of a heat exchange system according to additional embodiments of the present application;
FIG. 7 is a schematic diagram of a heat exchange system according to still further embodiments of the present application;
FIG. 8 is a schematic diagram of a heat exchange system according to even further embodiments of the present application; and
FIG. 9 is a schematic diagram of a heat exchange system according to yet additional embodiments of the present application.

Reference numerals: 10-Box body; 11-First part; 12-Second part; 20-Battery cell; 30-Heat exchange system; 31-Thermal management component; 311-First medium inlet; 312-Medium outlet; 32-Throttling apparatus; 33-First temperature sensor; 34-Pressure sensor; 35-Condenser; 36-Heating system; 361-First heat exchanger; 362-First pipeline; 363-Second pipeline; 365-Liquid supply system; 3651-Driver; 3652-Medium storage; 366-Second heat exchanger; 37-Compressor; 371-Second medium inlet; 38-Second temperature sensor; and 100-Battery.

**DETAILED DESCRIPTION**

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are merely some embodiments of the present application rather than all of the embodiments. All other embodiments obtained by those of ordinary skill in the art based on the embodiments of the present application without making creative efforts shall fall within the protection scope of the present application.

Unless otherwise defined, all technical and scientific terms used in the present application have same meanings as commonly understood by those skilled in the technical field of the present application. The terms used in the specification of the present application are merely for purpose of describing specific embodiments, and are not intended to limit the present application. The terms "comprise", "include" and any variations thereof in the specification and claims of the present application and in the above descriptions of the accompanying drawings are intended to cover non-exclusive inclusion. The terms "first", "second", and the like in the specification and claims of the present application or the accompanying drawings, are intended to distinguish different objects but do not necessarily indicate a specific order or primary-secondary relationship.

Reference to "an embodiment" in the present application means that a particular feature, structure, or characteristic described in combination with the embodiment may be included in at least one embodiment of the present application. The appearance of the phrase in various places in the specification is not necessarily referring to the same embodiment, nor a separate or alternative embodiment that is mutually exclusive of other embodiments.

In the description of the present application, it should be noted that unless otherwise explicitly specified or defined, the terms "mount", "link", "connect", and "attach" should be understood in a broad sense. For example, a connection may be a fixed connection, a detachable connection, or an integral connection; or the connection may be a direct connection, an indirect connection through an intermediary, or internal communication between two components. Those of ordinary skill in the art may understand specific meanings of the aforementioned terms in the present application according to specific situations.

The term "and/or" in the present application merely describes an association of associated objects, and indicates three possible relationships, for example, A and/or B may indicate three cases where A exists alone, A and B exist simultaneously, and B exists alone. In addition, the character "/" in the present application typically indicates an "or" relationship between associated objects.

In the embodiments of the present application, same reference numerals represent same components, and for brevity, detailed descriptions of the same components are omitted in different embodiments. It should be understood that in the embodiments of the present application, the dimensions such as the thickness, length, and width of various components, and the entire thickness, length, and width of an integrated apparatus illustrated in the accompanying drawings are merely exemplary descriptions, and should not be construed as any limitation to the present application.

"A plurality of" appearing in the present application means two or more (including two).

In the present application, battery cells may include lithium-ion secondary cells, lithium-ion primary cells, lithium-sulfur cells, sodium lithium-ion cells, sodium-ion cells, magnesium-ion cells, or the like, which is not limited in the embodiments of the present application. The battery cell may be cylindrical, flat, cuboid, or in another shape, which is also not limited in the embodiments of the present application. Generally, battery cells are divided into three types according to encapsulating methods: cylindrical cells, prismatic cells and pouch cells, which is also not limited in the embodiments of the present application.

A battery mentioned in the embodiments of the present application is a single physical module including one or more battery cells to provide a higher voltage and a higher capacity. For example, the battery mentioned in the present application may include a battery module, a battery pack, or the like. The battery typically includes a box body for encapsulating one or more battery cells. The box body may prevent liquids or other foreign objects from affecting charging or discharging of the battery cells to a certain extent.

Currently, from the development of the market situation, the application of batteries is becoming increasingly widespread. Batteries are applied not only to energy storage power systems such as hydroelectric, thermal, wind and solar power plants, but also to electric transportations such as electric bicycles, electric motorcycles, and electric vehicles, as well as in military equipment, aerospace and other fields. With continuous expansion of the application fields of batteries, the market demand for batteries is also increasing.

The development of a battery technology needs to consider design factors in many aspects at the same time, for example, performance parameters such as battery life, energy density, discharging capacity, and charging and discharging rate. In addition, the reliability of batteries also needs to be considered. However, the reliability of the current batteries is low.

Battery cells generate a large amount of heat during operation, resulting in an increase in the temperature of the battery cells. Temperature rise of battery cells to a certain degree will affect the performance of the battery cells. If the temperature of the battery cells rises continuously, the battery cells are prone to thermal runaway, causing the battery cells to catch fire or even explode. In related technologies, a water-cooled plate is used for dissipating heat from battery cells.

A water-cooled plate includes an inlet and an outlet. When water first enters the water-cooled plate, the water has a low temperature and a good heat dissipation effect on the battery cells. When the water flows to the middle or near the outlet of the water-cooled plate, the water that has adsorbed heat has an increased temperature and a poor heat dissipation effect. That is, the water-cooled plate has a good heat dissipation effect on the battery cells near the inlet, but a poor heat dissipation effect on the battery cells near the outlet. The water-cooled plate has low temperature uniformity, resulting in ineffective heat dissipation for the battery cells near the outlet of the water-cooled plate. The battery cells near the outlet of the water-cooled plate are more prone to thermal runaway, leading to low reliability of the current batteries.

In view of the above, an embodiment of the present application provides a heat exchange system. The heat exchange system includes a thermal management component, a throttling apparatus, a first temperature sensor, and a pressure sensor. The thermal management component includes a first medium inlet and a medium outlet. The throttling apparatus is communicated with the first medium inlet. The first temperature sensor is configured to detect the temperature of a first heat exchange medium at the medium outlet. The pressure sensor is configured to detect the pressure of the first heat exchange medium at the medium outlet. The throttling apparatus regulates the flow rate entering the first medium inlet in response to the first temperature sensor and the pressure sensor, to make the first heat exchange medium in the thermal management component in a gas-liquid mixed state.

The first temperature sensor is arranged for detecting the temperature of the first heat exchange medium at the medium outlet, the pressure sensor is arranged for detecting the pressure of the first heat exchange medium at the medium outlet, and the state of the first heat exchange medium at the medium outlet is determined according to the temperature and pressure of the first heat exchange medium at the medium outlet. The throttling apparatus is regulated according to the state of the first heat exchange medium at the medium outlet, to increase or decrease the flow rate entering the first medium inlet, to make the first heat exchange medium in the thermal management component in a gas-liquid mixed state. In this way, when the first heat exchange medium exchanges heat with a workpiece, the first heat exchange medium in a liquid state may be vaporized into a gas. Before and after the vaporization, the first heat exchange medium changes in phase but not in temperature. Or, the first heat exchange medium in a gas state may be liquefied into a liquid. Before and after the liquefaction, the first heat exchange medium changes in phase but not in temperature. The temperature of the first heat exchange medium in the thermal management component remains unchanged provided that the first heat exchange medium in the thermal management component is in the gas-liquid mixed state. Thus, the thermal management component has good temperature uniformity and good thermal management effect on the workpiece, helps full play of the performance of the workpiece, and improves the reliability of the workpiece.

The technical solution described in the embodiment of the present application is applicable to heat dissipation of workpieces, which may be batteries, battery cells, and the like.

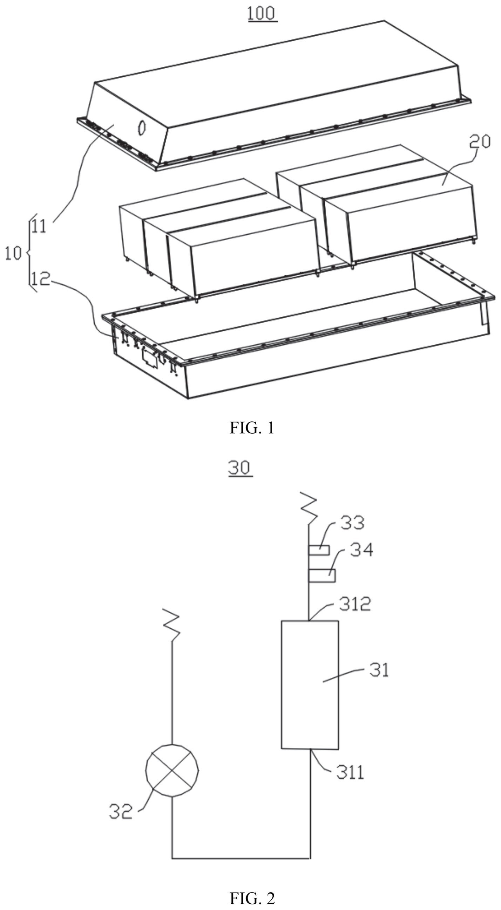

Referring to FIG. 1, which is an exploded view of a battery 100 according to some embodiments of the present application. The battery 100 includes a box body 10 and a battery cells 20. The battery cell 20 is accommodated in the box body 10. The box body 10 is used for providing an accommodating space for the battery cell 20, and the box body 10 may use various structures. In some embodiments, the box body 10 may include a first part 11 and a second part 12. The first part 11 and the second part 12 cover each other, and the first part 11 and the second part 12 jointly define the accommodating space for accommodating the battery cells 20. The second part 12 may be a hollow structure with an open end. The first part 11 may be a platelike structure. The first part 11 covers an open side of the second part 12, so that the first part 11 and the second part 12 jointly define the accommodating space. Or, both the first part 11 and the second part 12 may be hollow structures with open sides, and the open side of the first part 11 covers the open side of the second part 12. Of course, the box body 10 formed by the first part 11 and the second part 12 may, for example, be cylindrical, cuboid, or in another shape.

In the battery 100, a plurality of battery cells 20 may be arranged, and the plurality of battery cells 20 may be connected in series, in parallel, or in series-parallel. The series-parallel connection means that the plurality of battery cells 20 are connected both in series and in parallel. The plurality of battery cells 20 may be directly connected in series, in parallel, or in series-parallel together, and then the whole formed by the plurality of battery cells 20 may be accommodated in the box body 10. Of course, the battery 100 may be structured such that the plurality of battery cells 20 are first connected in series, in parallel, or in series-parallel to form battery modules, and then a plurality of battery modules are connected in series, in parallel, or in series-parallel to form a whole, which is accommodated in the box body 10. The battery 100 may further include other structures. For example, the battery 100 may further include a busbar component for achieving electrical connection between the plurality of battery cells 20.

Each battery cell 20 may be a secondary battery cell or primary battery cell, and may also be a lithium-sulfur battery cell, sodium-ion battery cell, or magnesium-ion battery cell, which is not limited thereto. The battery cell 20 may be cylindrical, flat, cuboid, or in an another shape.

Referring to FIG. 2, which is a schematic diagram of a heat exchange system 30 according to some embodiments of the present application. An embodiment of the present application provides the heat exchange system 30. The heat exchange system 30 includes a thermal management component 31, a throttling apparatus 32, a first temperature sensor 33, and a pressure sensor 34. The thermal management component 31 includes a first medium inlet 311 and a medium outlet 312. The throttling apparatus 32 is communicated with the first medium inlet 311. The first temperature sensor 33 is configured to detect the temperature of a first heat exchange medium at the medium outlet 312. The pressure sensor 34 is configured to detect the pressure of the first heat exchange medium at the medium outlet 312. The throttling apparatus 32 regulates the flow rate entering the first medium inlet 311 in response to the first temperature sensor 33 and the pressure sensor 34, to make the first heat exchange medium in the thermal management component 31 in a gas-liquid mixed state.

The thermal management component 31 is a component configured to control the temperature of a workpiece to be in a preset range. The thermal management component 31 may cool the workpiece, or may heat the workpiece. The thermal management component 31 may be in contact with the workpiece, and exchange heat with the workpiece by heat conduction. For example, the thermal management component 31 may be a direct cooling plate, and an outer surface of the thermal management component 31 is adhered to an outer surface of the workpiece. The thermal management component 31 may also be arranged separately from the workpiece, and exchange heat with the workpiece in a convective heat transfer or heat radiation manner. For example, the thermal management component 31 may be an internal unit of an air conditioner.

The thermal management component 31 includes the first medium inlet 311 and the medium outlet 312. The first medium inlet 311 is used for the first heat exchange medium to flow into the thermal management component 31, and the medium outlet 312 is used for the first heat exchange medium to flow out of the thermal management component 31.

The first heat exchange medium may be a refrigerant, for example, Freon, tetrafluoroethane, and trifluoromethane.

The throttling apparatus 32 is an apparatus configured to throttle a high-pressure liquid heat exchange medium into low-pressure wet steam. The throttling apparatus 32 can also control the flow rate entering the first medium inlet 311. The throttling apparatus 32 may be an expansion valve.

The first temperature sensor 33 is an apparatus configured to detect the temperature of the first heat exchange medium at the medium outlet 312. The first temperature sensor 33 can sense the temperature of the first heat exchange medium, and convert the temperature into an available output signal. The first temperature sensor 33 may be a contact temperature sensor, for example, a resistance thermometer. The first temperature sensor 33 may also be a non-contact temperature sensor, for example, a radiation thermometer.

The pressure sensor 34 is an apparatus configured to detect the pressure of the first heat exchange medium at the medium outlet 312. The pressure sensor 34 may be a piezoresistive gas pressure sensor.

The throttling apparatus 32 may be directly in communication connection to the first temperature sensor 33. For example, the throttling apparatus 32 is connected to the first temperature sensor 33 in a wired connection manner by a wire, a network cable, or the like. For another example, the throttling apparatus 32 is connected to the first temperature sensor 33 in a wireless connection manner by Bluetooth, a wireless network, or the like. The throttling apparatus 32 may also be indirectly electrically connected to the first temperature sensor 33 by an intermediate component. For example, the intermediate component may be a controller, the throttling apparatus 32 is electrically connected to the controller, and the controller is electrically connected to the first temperature sensor 33. Similarly, the throttling apparatus 32 may be directly in communication connection to the pressure sensor 34. For example, the throttling apparatus 32 is connected to the pressure sensor 34 in a wired connection manner by a wire, a network cable, or the like. For another example, the throttling apparatus 32 is connected to the pressure sensor 34 in a wireless connection manner by Bluetooth, a wireless network, or the like. The throttling apparatus 32 may also be indirectly electrically connected to the pressure sensor 34 by an intermediate component. For example, the intermediate component may be a controller, the throttling apparatus 32 is electrically connected to the controller, and the controller is electrically connected to the pressure sensor 34.

In some embodiments, the throttling apparatus 32 is separately electrically connected to the first temperature sensor 33 and the pressure sensor 34 by controllers. The controllers receive the temperature detected by the first temperature sensor 33 and the pressure detected by the pressure sensor 34, and control the action of the throttling apparatus 32 according to the detected temperature and pressure, thereby regulating the flow rate entering the first medium inlet 311, and making the first heat exchange medium in the thermal management component 31 in a gas-liquid mixed state.

When the temperature detected by the first temperature sensor 33 is greater than a corresponding saturation temperature (a saturation temperature refers to the temperature at which a liquid and a vapor are in a dynamic balance state, i.e., in a saturation state; in the saturation state, the temperature of the liquid and the temperature of the vapor are equal; when the saturation temperature is specified, the saturation pressure is also specified; otherwise, when the saturation pressure is specified, the saturation temperature is specified; when the pressure rises, a new dynamic balance state is formed at a new temperature; and a saturation temperature of a substance corresponds to a saturation pressure) of the first heat exchange medium at the pressure detected by the pressure sensor 34, it indicates that the first heat exchange medium at the medium outlet 312 is thoroughly in a gas state, and has already absorbed part of heat. Therefore, the throttling apparatus 32 may be regulated to increase the flow rate entering the first medium inlet 311, until the temperature detected by the first temperature sensor 33 is less than or equal to the corresponding saturation temperature of the first heat exchange medium at the pressure detected by the pressure sensor 34. When the temperature detected by the first temperature sensor 33 is less than or equal to the corresponding saturation temperature of the first heat exchange medium at the pressure detected by the pressure sensor 34, it indicates that the first heat exchange medium at the medium outlet 312 is in a gas-liquid mixed state or just a saturated gas state, and the temperature of the first heat exchange medium at each position in the thermal management component 31 is equal.

The first temperature sensor 33 is arranged for detecting the temperature of the first heat exchange medium at the medium outlet 312, the pressure sensor 34 is arranged for detecting the pressure of the first heat exchange medium at the medium outlet 312, and the state of the first heat exchange medium at the medium outlet 312 is determined according to the temperature and pressure of the first heat exchange medium at the medium outlet 312. The throttling apparatus 32 is regulated according to the state of the first heat exchange medium at the medium outlet 312, to increase or decrease the flow rate entering the first medium inlet 311, to make the first heat exchange medium in the thermal management component 31 in a gas-liquid mixed state. In this way, when the first heat exchange medium exchanges heat with a workpiece, the first heat exchange medium in a liquid state may be vaporized into a gas. Before and after the vaporization, the first heat exchange medium changes in phase but not in temperature. Or, the first heat exchange medium in a gas state may be liquefied into a liquid. Before and after the liquefaction, the first heat exchange medium changes in phase but not in temperature. The temperature of the first heat exchange medium in the thermal management component 31 remains unchanged provided that the first heat exchange medium in the thermal management component 31 is in the gas-liquid mixed state. Thus, the thermal management component 31 has good temperature uniformity and good thermal management effect on the workpiece, helps full play of the performance of the workpiece, and improves the reliability of the workpiece.

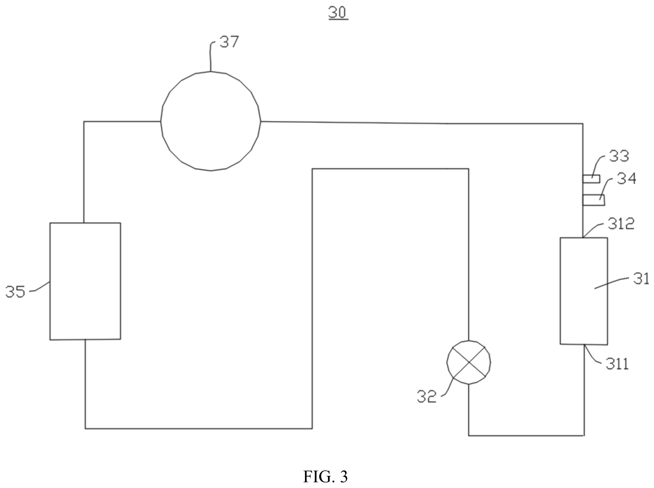

Referring to FIG. 3, which is a schematic diagram of a heat exchange system 30 according to some other embodiments of the present application. In some other embodiments, the heat exchange system 30 further includes a compressor 37 and a condenser 35. The compressor 37, the condenser 35, the throttling apparatus 32, and the thermal management component 31 form a circulation loop.

The compressor 37 is a driven fluid machine that converts low-pressure gas into high-pressure gas. The condenser 35 is a machine that condenses a gas or a vapor into a liquid.

The compressor 37, the condenser 35, the throttling apparatus 32, and the thermal management component 31 may be communicated with each other by pipelines, so that the first heat exchange medium can circulate in the compressor 37, the condenser 35, the throttling apparatus 32, and the thermal management component 31.

The first heat exchange medium flowing out from the medium outlet 312 is compressed by the compressor 37 into a high-temperature and high-pressure gas. The high-temperature and high-pressure gas passes through the condenser 35 and is then cooled into a high-temperature and high-pressure subcooled liquid (a phenomenon in which a liquid still does not freeze when the temperature of the liquid is already lower than the freezing point of the liquid at a pressure is referred to as a supercooling phenomenon, and in this case, the liquid is referred to as a subcooled liquid; the temperature of the high-temperature and high-pressure subcooled liquid is higher than the temperature of the first heat exchange medium at the medium outlet 312), and the high-temperature and high-pressure subcooled liquid passes through the throttling apparatus 32 and becomes a low-pressure gas-liquid mixed state. The first heat exchange medium in the low-pressure gas-liquid mixed state enters, through the first medium inlet 311, the heat exchanger to exchange heat with the workpiece, to achieve thermal management of the workpiece.

The circulation loop is formed by the compressor 37, the condenser 35, the throttling apparatus 32, and the thermal management component 31 to achieve circulation flow of the first heat exchange medium, thereby helping reduce the consumption of the first heat exchange medium.

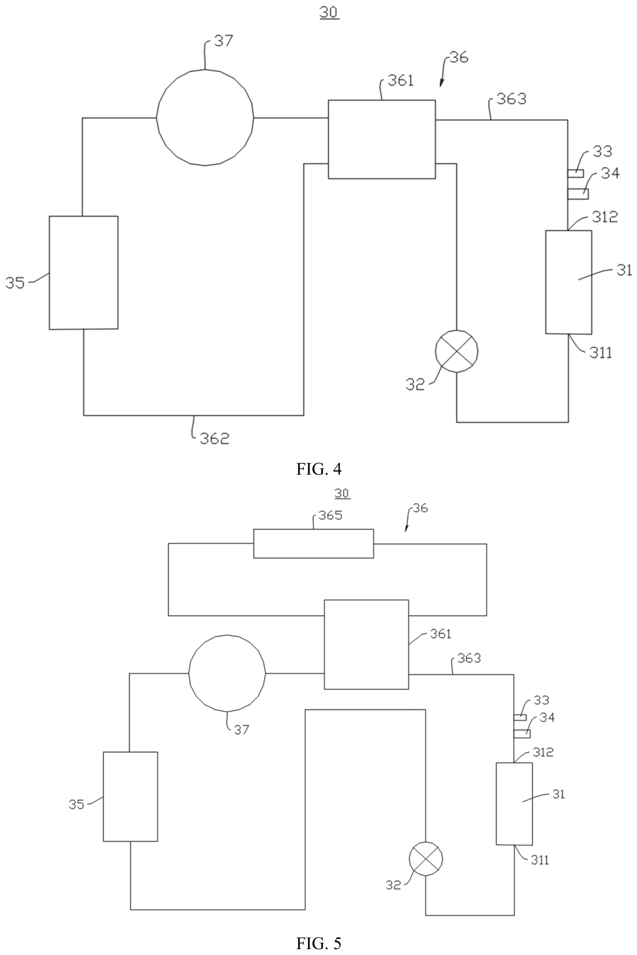

Referring to FIG. 4, which is a schematic diagram of a heat exchange system 30 according to still some other embodiments of the present application. In still some other embodiments, the heat exchange system 30 includes a heating system 36. The heating system 36 is configured to heat the first heat exchange medium flowing out from the medium outlet 312.

The heating system 36 is used for heating the first heat exchange medium flowing out from the medium outlet 312. The heating system 36 may heat the first heat exchange medium flowing out from the medium outlet 312 in at least one heat transfer manner of heat conduction, heat radiation, and convective heat transfer.

The first heat exchange medium flowing out from the medium outlet 312 is in the gas-liquid mixed state or a saturated gas state. The first heat exchange medium in the gas-liquid mixed state contains a liquid, and the first heat exchange medium in the saturated gas state may be partially liquefied into a liquid when entering the compressor 37. The first heat exchange medium in the gas-liquid mixed state or the saturated gas state may cause liquid impact on the compressor 37 when entering the compressor 37, causing damage to the compressor 37. The heating system 36 is arranged for heating the first heat exchange medium flowing out from the medium outlet 312, so that the first heat exchange medium becomes a superheated gas (the superheated gas is a relatively dry vapor obtained by heating a liquid to vaporize into a saturated vapor and continuing heating the saturated vapor), thereby reducing the risk of liquid impact on the compressor 37 when the first heat exchange medium enters the compressor 37.

Referring to FIG. 4, in still some other embodiments, the condenser 35 is communicated with the throttling apparatus 32 by a first pipeline 362, and the thermal management component 31 is communicated with the compressor 37 by a second pipeline 363. The heating system 36 includes a first heat exchanger 361. The first heat exchanger 361 is connected to the first pipeline 362 and the second pipeline 363. The first heat exchanger 361 is configured to achieve heat exchange between a first heat exchange medium in the first pipeline 362 and a first heat exchange medium in the second pipeline 363.

The first pipeline 362 is communicated with the condenser 35 and the throttling apparatus 32, and a first heat exchange medium flowing out of the condenser 35 enters the throttling apparatus 32 through the first pipeline 362.

The second pipeline 363 is communicated with the thermal management component 31 and the compressor 37, and a first heat exchange medium flowing out of the thermal management component 31 enters the compressor 37 through the second pipeline 363.

In still some other embodiments, the first heat exchanger 361 is connected to the first pipeline 362 and the second pipeline 363, and is configured to achieve heat exchange between the first heat exchange medium in the first pipeline 362 and the first heat exchange medium in the second pipeline 363. Thus, the first heat exchange medium flowing out of the condenser 35 is used for heating the first heat exchange medium flowing out of the thermal management component 31.

The first heat exchange medium in the first pipeline 362 is a high-temperature and high-pressure subcooled liquid whose temperature is higher than the temperature of the first heat exchange medium flowing out from the medium outlet 312. By heating the first heat exchange medium flowing out from the medium outlet 312 with the first heat exchange medium in the first pipeline 362, the first heat exchange medium flowing out from the medium outlet 312 can be heated into a superheated gas, and further the temperature of the first heat exchange medium entering the throttling apparatus 32 can be reduced, so that the subcooling is increased, and the cooling capacity of the heat exchange system 30 is increased.

Referring to FIG. 5, which is a schematic diagram of a heat exchange system 30 according to further embodiments of the present application. In further embodiments, the thermal management component 31 is communicated with the compressor 37 by the second pipeline 363. The heating system 36 includes a liquid supply system 365 and a first heat exchanger 361. The liquid supply system 365 is configured to supply the second heat exchange medium to the first heat exchanger 361. The first heat exchanger 361 is connected to the second pipeline 363. The first heat exchanger 361 is configured to achieve heat exchange between the first heat exchange medium in the second pipeline 363 and the second heat exchange medium.

The liquid supply system 365 is a system configured to supply the second heat exchange medium to the first heat exchanger 361. Because the first heat exchange medium in the second pipeline 363 needs to be heated, the temperature of the second heat exchange medium is to be higher than the temperature of the first heat exchange medium.

The second heat exchange medium may be a gas medium, for example, air. The second heat exchange medium may also be a liquid medium, for example, water. Of course, the second heat exchange medium may also be a refrigerant.

In further embodiments, the first heat exchanger 361 is connected to the second pipeline 363 for achieving heat exchange between the first heat exchange medium in the second pipeline 363 and the second heat exchange medium. Thus, the first heat exchange medium in the second pipeline 363 is heated by the second heat exchange medium.

The liquid supply system 365 supplies the second heat exchange medium to the first heat exchanger 361, and the first heat exchange medium in the second pipeline 363 is heated by the second heat exchange medium, so that the first heat exchange medium becomes a superheated gas, thereby reducing the risk of liquid impact on the compressor 37 when the first heat exchange medium enters the compressor 37. In a case that the liquid supply system 365 supplies the second heat exchange medium to the first heat exchanger 361, the flow rate of the second heat exchange medium entering the first heat exchanger 361 may be regulated as required, and also the temperature of the second heat exchange medium may be regulated as required, which is more flexible.

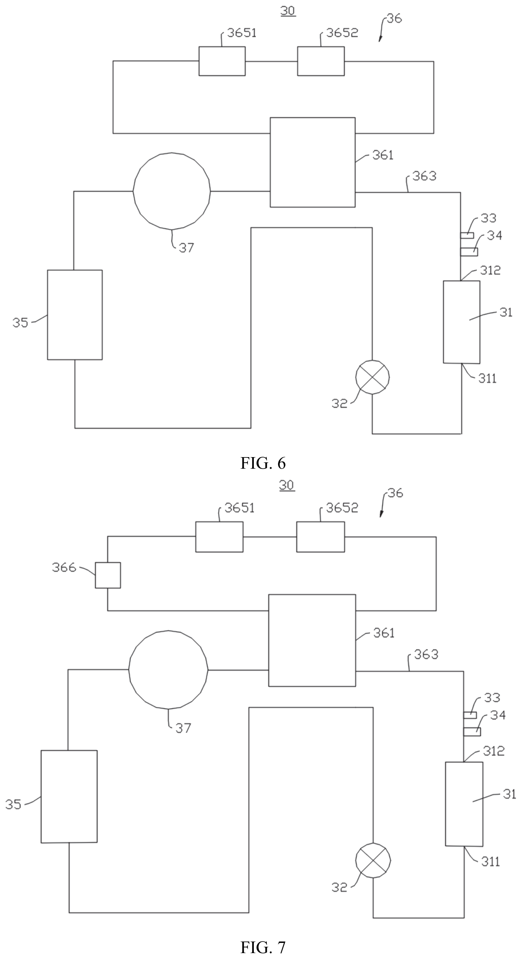

Referring to FIG. 5 and FIG. 6, FIG. 6 is a schematic diagram of a heat exchange system 30 according to additional embodiments of the present application. In some embodiments, the liquid supply system 365 includes a medium storage 3652 and a driver 3651. The medium storage 3652 is configured to store the second heat exchange medium. The medium storage 3652, the driver 3651, and the first heat exchanger 361 form a circulation loop.

The medium storage 3652 is a container configured to store the second heat exchange medium. For example, the medium storage 3652 may be a medium storage box, a medium storage tank, a medium storage pool, or the like.

The driver 3651 provides power for the second heat exchange medium to flow. When the second heat exchange medium is a gas, the driver 3651 may be a gas pump. When the second heat exchange medium is a liquid, the second heat exchange medium is a liquid pump.

The medium storage 3652, the driver 3651, and the first heat exchanger 361 may be communicated by pipelines, so that the second heat exchange medium can circulate in the medium storage 3652, the driver 3651, and the first heat exchanger 361.

The driver 3651 can drive the second heat exchange medium stored in the medium storage 3652 to the first heat exchanger 361, so that the first heat exchange medium in the second pipeline is heated by the second heat exchange medium in the first heat exchanger 361. The circulation loop is formed by the medium storage 3652, the driver 3651, and the first heat exchanger 361, which helps reduce the consumption of the second heat exchange medium.

Referring to FIG. 7, which is a schematic diagram of a heat exchange system 30 according to still further embodiments of the present application. In still further embodiments, the heating system 36 further includes a second heat exchanger 366. The second heat exchanger 366, the liquid supply system 365, and the first heat exchanger 361 form a circulation loop. The second heat exchanger 366 is configured to heat the second heat exchange medium.

The second heat exchanger 366 is configured to achieve heat exchange between the second heat exchange medium and the outside, to recover heat from the outside. For example, the second heat exchanger 366 may recover waste heat from the compressor 37, a motor, a condenser air side, and the like, to heat the second heat exchange medium.

The second heat exchanger 366, the liquid supply system 365, and the first heat exchanger 361 may be communicated by pipelines, so that the second heat exchange medium can circulate in the second heat exchanger 366, the liquid supply system 365, and the first heat exchanger 361.

The second heat exchange medium in the second heat exchanger 366 can exchange heat with other systems, to recover heat from the systems, and the first heat exchange medium in the second pipeline can be heated using the recovered heat, which help reduce the energy consumption of the heat exchange system 30 and reduce the production costs.

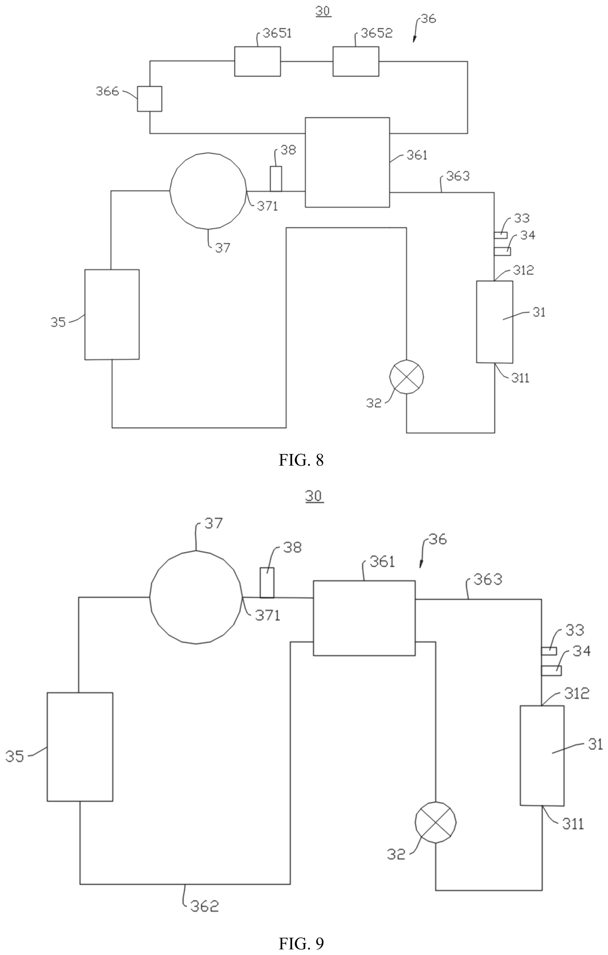

Referring to FIG. 8, which is a schematic diagram of a heat exchange system 30 according to even further embodiments of the present application. In even further embodiments, the compressor 37 includes a second medium inlet 371. The second medium inlet 371 is communicated with the medium outlet 312. The heat exchange system 30 further includes a second temperature sensor 38. The second temperature sensor 38 is configured to detect the temperature of the first heat exchange medium at the second medium inlet 371. The liquid supply system 365 regulates the flow rate of the second heat exchange medium passing through the first heat exchanger 361 in response to the first temperature sensor 33 and the second temperature sensor 38.

The second medium inlet 371 is used for the first heat exchange medium to flow into the compressor 37. The second medium inlet 371 is communicated with the medium outlet 312 by the second pipeline.

The second temperature sensor 38 is an apparatus configured to detect the temperature of the first heat exchange medium at the second medium inlet 371. The second temperature sensor 38 can sense the temperature of the first heat exchange medium, and convert the temperature into an available output signal. The second temperature sensor 38 may be a contact temperature sensor, for example, a resistance thermometer. The second temperature sensor 38 may also be a non-contact temperature sensor, for example, a radiation thermometer.

The liquid supply system 365 may be directly in communication connection to the first temperature sensor 33. For example, the liquid supply system 365 is connected to the first temperature sensor 33 in a wired connection manner by a wire, a network cable, or the like. For another example, the liquid supply system 365 is connected to the first temperature sensor 33 in a wireless connection manner by Bluetooth, a wireless network, or the like. The liquid supply system 365 may also be indirectly electrically connected to the first temperature sensor 33 by an intermediate component. For example, the intermediate component may be a controller, the liquid supply system 365 is electrically connected to the controller, and the controller is electrically connected to the first temperature sensor 33. Similarly, the liquid supply system 365 may be directly in communication connection to the second temperature sensor 38. For example, the liquid supply system 365 is connected to the second temperature sensor 38 in a wired connection manner by a wire, a network cable, or the like. For another example, the liquid supply system 365 is connected to the second temperature sensor 38 in a wireless connection manner by Bluetooth, a wireless network, or the like. The liquid supply system 365 may also be indirectly electrically connected to the second temperature sensor 38 by an intermediate component. For example, the intermediate component may be a controller, the liquid supply system 365 is electrically connected to the controller, and the controller is electrically connected to the second temperature sensor 38.

In some embodiments, the liquid supply system 365 is separately electrically connected to the first temperature sensor 33 and the second temperature sensor 38 by a controller. The controller receives the temperature detected by the first temperature sensor 33 and the temperature detected by the second temperature sensor 38, and controls the action of the liquid supply system 365 according to the temperature detected by the first temperature sensor 33 and the temperature detected by the second temperature sensor 38, thereby regulating the flow rate of the second heat exchange medium passing through the first heat exchanger 361.

When a difference between the temperature detected by the second temperature sensor 38 and the temperature detected by the first temperature sensor 33 is less than or equal to the safe superheat at an inlet of the compressor 37, it indicates that the superheat (the superheat refers to a difference between the superheated temperature and the saturation temperature of the first heat exchange medium at a same pressure) of the first heat exchange medium at the second medium inlet 371 is less than the safe superheat at the inlet of the compressor 37, and the liquid supply system 365 may be regulated to increase the flow rate of the second heat exchange medium passing through the first heat exchanger 361, to increase the temperature of the first heat exchange medium flowing out from the medium outlet 312 to a higher temperature, until the superheat of the first heat exchange medium at the second medium inlet 371 is greater than or equal to the safe superheat at the inlet of the compressor 37.

The second temperature sensor 38 is arranged for detecting the temperature at the second medium inlet 371, and whether the superheat of the first heat exchange medium at the second medium inlet 371 meets a requirement is determined according to the temperature detected by the first temperature sensor 33 and the temperature detected by the second temperature sensor 38. When the superheat of the first heat exchange medium at the second medium inlet 371 does not meet a requirement, the liquid supply system 365 may increase the flow rate of the second heat exchange medium passing through the first heat exchanger 361, to increase the temperature of the first heat exchange medium in the second pipeline to a higher temperature, thereby reducing the risk of liquid impact on the compressor 37 when the first heat exchange medium enters the compressor 37.

Referring to FIG. 9, which is a schematic diagram of a heat exchange system 30 according to additional embodiments of the present application. In additional embodiments, the compressor 37 includes the second medium inlet 371. The second medium inlet 371 is communicated with the medium outlet 312. The heat exchange system 30 further includes the second temperature sensor 38. The second temperature sensor 38 is configured to detect the temperature of the first heat exchange medium at the second medium inlet 371. The throttling apparatus 32 is in response to the second temperature sensor 38.

The throttling apparatus 32 may be directly in communication connection to the second temperature sensor 38. For example, the throttling apparatus 32 is connected to the second temperature sensor 38 in a wired connection manner by a wire, a network cable, or the like. For another example, the throttling apparatus 32 is connected to the second temperature sensor 38 in a wireless connection manner by Bluetooth, a wireless network, or the like. The throttling apparatus 32 may also be indirectly electrically connected to the second temperature sensor 38 by an intermediate component. For example, the intermediate component may be a controller, the throttling apparatus 32 is electrically connected to the controller, and the controller is electrically connected to the second temperature sensor 38.

In some embodiments, the throttling apparatus 32 is separately electrically connected to the first temperature sensor 33, the second temperature sensor 38, and the pressure sensor 34 by a controller. The controller receives the temperature detected by the first temperature sensor 33, the temperature detected by the second temperature sensor 38, and the pressure detected by the pressure sensor 34, and controls the action of the throttling apparatus 32 according to the temperature detected by the first temperature sensor 33, the temperature detected by the second temperature sensor 38, and the pressure detected by the pressure sensor 34, thereby regulating the flow rate entering the first medium inlet 311.

The second temperature sensor 38 is arranged for detecting the temperature at the second medium inlet 371, and whether the superheat of the first heat exchange medium at the second medium inlet 371 meets a requirement is determined according to the temperature detected by the first temperature sensor 33 and the temperature detected by the second temperature sensor 38. When the superheat of the first heat exchange medium at the second medium inlet 371 does not meet a requirement, it indicates that the flow rate entering the first medium inlet 311 is excessively high, and the flow rate entering the first medium inlet 311 may be slightly reduced by the throttling apparatus 32.

An embodiment of the present application further provides a battery 100. The battery 100 includes a battery cell 20, a box body 10, and the aforementioned heat exchange system 30. The box body 10 accommodates the battery cell 20. The thermal management component 31 is accommodated in the box body 10, and the thermal management component 31 is configured to manage the temperature of the battery cell 20.

An embodiment of the present application further provides a control method, and the control method is based on the aforementioned heat exchange system 30. The control method includes: when $T_1 > T_3$, regulating the throttling apparatus 32 to increase the flow rate entering the first medium inlet 311, until $T_1 \leq T_3$. $T_1$ is the temperature detected by the first temperature sensor 33, and $T_3$ is a corresponding saturation temperature of the first heat exchange medium at the pressure detected by the pressure sensor 34.

When the temperature detected by the first temperature sensor 33 is greater than the corresponding saturation temperature of the first heat exchange medium at the pressure detected by the pressure sensor 34, it indicates that the first heat exchange medium at the medium outlet 312 is thoroughly in a gas state, and has already absorbed part of heat. Therefore, the throttling apparatus 32 may be regulated to increase the flow rate entering the first medium inlet 311, until the temperature detected by the first temperature sensor 33 is less than or equal to the corresponding saturation temperature of the first heat exchange medium at the pressure detected by the pressure sensor 34. When the temperature detected by the first temperature sensor 33 is less than or equal to the corresponding saturation temperature of the first heat exchange medium at the pressure detected by the pressure sensor 34, it indicates that the first heat exchange medium at the medium outlet 312 is in a gas-liquid mixed state or just a saturated gas state, and the temperature of the first heat exchange medium at each position in the thermal management component 31 is equal.

In some embodiments, the heat exchange system 30 further includes the compressor 37 and the condenser 35. The compressor 37, the condenser 35, the throttling apparatus 32, and the thermal management component 31 form a circulation loop. The heat exchange system 30 includes the heating system 36. The heating system 36 is configured to heat the first heat exchange medium flowing out from the medium outlet 312. The compressor 37 includes the second medium inlet 371. The second medium inlet 371 is communicated with the medium outlet 312. The heat exchange system 30 further includes the second temperature sensor 38. The second temperature sensor 38 is configured to detect the temperature of the first heat exchange medium at the second medium inlet 371. The control method includes: when $T_1 \leq T_3$ and $T_2 - T_1 \leq T$, regulating the throttling apparatus 32 to decrease the flow rate entering the first medium inlet 311, until $T_1 \leq T_3$ and $T_2 - T_1 > T$. $T_2$ is the temperature detected by the second temperature sensor 38, and T is the safe superheat at an inlet of the compressor 37.

The superheat refers to a difference between the superheated temperature and the saturation temperature of a heat exchange medium at a same pressure. For example, if the superheated temperature is 105°C, and the saturation temperature is 100°C, then the superheat is 5°C.

The safe superheat at the inlet of the compressor 37 is determined during manufacture of the compressor 37. When the temperature of the first heat exchange medium at the second medium inlet 371 is higher than the safe superheat, the risk of liquid impact caused by the first heat exchange medium on the compressor 37 is small.

When $T_1 \leq T_3$ and $T_2 - T_1 \leq T$, it indicates that the first heat exchange medium in the thermal management component 31 is thoroughly in a gas-liquid mixed state. However, the superheat of the first heat exchange medium at the second medium inlet 371 does not meet a requirement, and it indicates that the flow rate entering the first medium inlet 311 is excessively high, and the flow rate entering the first medium inlet 311 may be slightly reduced by the throttling apparatus 32 until $T_1 \leq T_3$ and $T_2 - T_1 > T$. That is, the first heat exchange medium in the thermal management component 31 is thoroughly in the gas-liquid mixed state, and the superheat of the first heat exchange medium at the second medium inlet 371 meets a requirement.

In some other embodiments, the heat exchange system 30 further includes the compressor 37 and the condenser 35. The compressor 37, the condenser 35, the throttling apparatus 32, and the thermal management component 31 form a circulation loop. The heat exchange system 30 includes the heating system 36. The heating system 36 is configured to heat the first heat exchange medium flowing out from the medium outlet 312. The thermal management component 31 is communicated with the compressor 37 by the second pipeline 363. The heating system 36 includes the liquid supply system 365 and the first heat exchanger 361. The liquid supply system 365 is configured to supply the second heat exchange medium to the first heat exchanger 361. The first heat exchanger 361 is connected to the second pipeline 363. The first heat exchanger 361 is configured to achieve heat exchange between the first heat exchange medium in the second pipeline 363 and the second heat exchange medium. The compressor 37 includes the second medium inlet 371. The second medium inlet 371 is communicated with the medium outlet 312. The heat exchange system 30 further includes the second temperature sensor 38. The second temperature sensor 38 is configured to detect the temperature of the first heat exchange medium at the second medium inlet 371. The control method includes: when $T_2 - T_1 \leq T$, regulating the liquid supply system 365 to increase the flow rate of the second heat exchange medium supplied to the first heat exchanger 361, until $T_2 - T_1 > T$. $T_2$ is the temperature detected by the second temperature sensor 38, and T is the safe superheat at an inlet of the compressor 37.

When $T_2 - T_1 \leq T$, it indicates that the superheat of the first heat exchange medium at the second medium inlet 371 does not meet a requirement, and the liquid supply system 365 may increase the flow rate of the second heat exchange medium passing through the first heat exchanger 361, to increase the temperature of the first heat exchange medium in the second pipeline to a higher temperature, until $T_2 - T_1 > T$. That is, the superheat of the first heat exchange medium at the second medium inlet 371 meets a requirement.

In some embodiments, the liquid supply system 365 includes the medium storage 3652 and the driver 3651. The medium storage 3652 is configured to store the second heat exchange medium. The medium storage 3652, the driver 3651, and the first heat exchanger 361 form a circulation loop. The control method includes:

when $T_2-T_1 \leq T$, increasing the power of the driver 3651 to increase the flow rate of the second heat exchange medium supplied to the first heat exchanger 361.

The driver 3651 may use a variable-frequency pump, to help regulate its power.

The flow rate of the second heat exchange medium supplied to the first heat exchanger 361 may be increased by increasing the power of the driver 3651, so that the superheat of the first heat exchange medium at the second medium inlet 371 meets a requirement, which is simple and convenient in regulation.

In some embodiments, the control method includes: when $T_2-T_1 > T+\Delta T$, regulating the liquid supply system 365 to decrease the flow rate of the second heat exchange medium supplied to the first heat exchanger 361, until $T < T_2-T_1 \leq T+\Delta T$. $\Delta T = 6°C$.

When $T_2-T_1 > T+\Delta T$, it indicates that the superheat of the first heat exchange medium at the second medium inlet 371 is excessively high, and consequently, the energy consumption of the heat exchange system 30 increases. The liquid supply system 365 is regulated to reduce the flow rate of the second heat exchange medium supplied to the first heat exchanger 361, to control the superheat of the first heat exchange medium at the second medium inlet 371 to be in a preset range, thereby reducing the energy consumption of the heat exchange system 30 and reducing the production costs.

According to some embodiments of the present application, referring to FIG. 2 to FIG. 9.

An embodiment of the present application provides a heat exchange system 30. The heat exchange system 30 includes the compressor 37, the condenser 35, the thermal management component 31, the throttling apparatus 32, the first temperature sensor 33, and the pressure sensor 34. The compressor 37, the condenser 35, the throttling apparatus 32, and the thermal management component 31 form a circulation loop. The thermal management component 31 includes the first medium inlet 311 and the medium outlet 312. The throttling apparatus 32 is communicated with the first medium inlet 311. The first temperature sensor 33 is configured to detect the temperature of the first heat exchange medium at the medium outlet 312. The pressure sensor 34 is configured to detect the pressure of the first heat exchange medium at the medium outlet 312. The throttling apparatus 32 regulates the flow rate entering the first medium inlet 311 in response to the first temperature sensor 33 and the pressure sensor 34, to make the first heat exchange medium in the thermal management component 31 in a gas-liquid mixed state. The first temperature sensor 33 is arranged for detecting the temperature of the first heat exchange medium at the medium outlet 312, the pressure sensor 34 is arranged for detecting the pressure of the first heat exchange medium at the medium outlet 312, and the state of the first heat exchange medium at the medium outlet 312 is determined according to the temperature and pressure of the first heat exchange medium at the medium outlet 312.

The throttling apparatus 32 is regulated according to the state of the first heat exchange medium at the medium outlet 312, to increase or decrease the flow rate entering the first medium inlet 311, to make the first heat exchange medium in the thermal management component 31 in a gas-liquid mixed state. In this way, when the first heat exchange medium exchanges heat with a workpiece, the first heat exchange medium in a liquid state may be vaporized into a gas. Before and after the vaporization, the first heat exchange medium changes in phase but not in temperature. Or, the first heat exchange medium in a gas state may be liquefied into a liquid. Before and after the liquefaction, the first heat exchange medium changes in phase but not in temperature. The temperature of the first heat exchange medium in the thermal management component 31 remains unchanged provided that the first heat exchange medium in the thermal management component 31 is in the gas-liquid mixed state. Thus, the thermal management component 31 has good temperature uniformity and good thermal management effect on the workpiece, helps full play of the performance of the workpiece, and improves the reliability of the workpiece.

The heat exchange system 30 includes the heating system 36. The heating system 36 is configured to heat the first heat exchange medium flowing out from the medium outlet 312. The condenser 35 is communicated with the throttling apparatus 32 by the first pipeline 362, and the thermal management component 31 is communicated with the compressor 37 by the second pipeline 363. The heating system 36 includes the first heat exchanger 361. The first heat exchanger 361 is connected to the first pipeline 362 and the second pipeline 363. The first heat exchanger 361 is configured to achieve heat exchange between the first heat exchange medium in the first pipeline 362 and the first heat exchange medium in the second pipeline 363. The first heat exchange medium in the first pipeline 362 is a high-temperature and high-pressure subcooled liquid whose temperature is higher than the temperature of the first heat exchange medium flowing out from the medium outlet 312. By heating the first heat exchange medium flowing out from the medium outlet 312 with the first heat exchange medium in the first pipeline 362, the first heat exchange medium flowing out from the medium outlet 312 can be heated into a superheated gas, and further the temperature of the first heat exchange medium entering the throttling apparatus 32 can be reduced, so that the subcooling is increased, and the cooling capacity of the heat exchange system 30 is increased.

In some embodiments, the compressor 37 includes the second medium inlet 371. The second medium inlet 371 is communicated with the medium outlet 312. The heat exchange system 30 further includes the second temperature sensor 38. The second temperature sensor 38 is configured to detect the temperature of the first heat exchange medium at the second medium inlet 371. The liquid supply system 365 regulates the flow rate of the second heat exchange medium passing through the first heat exchanger 361 in response to the first temperature sensor 33 and the second temperature sensor 38. The second temperature sensor 38 is arranged for detecting the temperature at the second medium inlet 371, and whether the superheat of the first heat exchange medium at the second medium inlet 371 meets a requirement is determined according to the temperature detected by the first temperature sensor 33 and the temperature detected by the second temperature sensor 38. When the superheat of the first heat exchange medium at the second medium inlet 371 does not meet a requirement, the liquid supply system 365 may increase the flow rate of the second heat exchange medium passing through the first heat exchanger 361, to increase the temperature of the first heat exchange medium in the second pipeline to a higher temperature.

The thermal management component 31 is communicated with the compressor 37 by the second pipeline 363. The heating system 36 includes a liquid supply system 365 and a first heat exchanger 361. The liquid supply system 365 is configured to supply the second heat exchange medium to the first heat exchanger 361. The first heat exchanger 361 is connected to the second pipeline 363. The first heat exchanger 361 is configured to achieve heat exchange between the first heat exchange medium in the second pipeline 363 and the second heat exchange medium. The liquid supply system 365 supplies the second heat exchange medium to the first heat exchanger 361, and the first heat exchange medium in the second pipeline 363 is heated by the second heat exchange medium, so that the first heat exchange medium becomes a superheated gas, thereby reducing the risk of liquid impact on the compressor 37 when the first heat exchange medium enters the compressor 37. In a case that the liquid supply system 365 supplies the second heat exchange medium to the first heat exchanger 361, the flow rate of the second heat exchange medium entering the first heat exchanger 361 may be regulated as required, and also the temperature of the second heat exchange medium may be regulated as required, which is more flexible.

The compressor 37 includes the second medium inlet 371. The second medium inlet 371 is communicated with the medium outlet 312. The heat exchange system 30 further includes the second temperature sensor 38. The second temperature sensor 38 is configured to detect the temperature of the first heat exchange medium at the second medium inlet 371. The throttling apparatus 32 is in response to the second temperature sensor 38. The second temperature sensor 38 is arranged for detecting the temperature at the second medium inlet 371, and whether the superheat of the first heat exchange medium at the second medium inlet 371 meets a requirement is determined according to the temperature detected by the first temperature sensor 33 and the temperature detected by the second temperature sensor 38. When the superheat of the first heat exchange medium at the second medium inlet 371 does not meet a requirement, it indicates that the flow rate entering the first medium inlet 311 is excessively high, and the flow rate entering the first medium inlet 311 may be slightly reduced by the throttling apparatus 32.

An embodiment of the present application further provides a control method, and the control method is based on the aforementioned heat exchange system 30. The control method includes: when $T_1>T_3$, regulating the throttling apparatus 32 to increase the flow rate entering the first medium inlet 311, until $T_1 \leq T_3$. $T_1$ is the temperature detected by the first temperature sensor 33, and $T_3$ is a corresponding saturation temperature of the first heat exchange medium at the pressure detected by the pressure sensor 34. When the temperature detected by the first temperature sensor 33 is greater than the corresponding saturation temperature of the first heat exchange medium at the pressure detected by the pressure sensor 34, it indicates that the first heat exchange medium at the medium outlet 312 is thoroughly in a gas state, and has already absorbed part of heat. Therefore, the throttling apparatus 32 may be regulated to increase the flow rate entering the first medium inlet 311, until the temperature detected by the first temperature sensor 33 is less than or equal to the corresponding saturation temperature of the first heat exchange medium at the pressure detected by the pressure sensor 34. When the temperature detected by the first temperature sensor 33 is less than or equal to the corresponding saturation temperature of the first heat exchange medium at the pressure detected by the pressure sensor 34, it indicates that the first heat exchange medium at the medium outlet 312 is in a gas-liquid mixed state or just a saturated gas state, and the temperature of the first heat exchange medium at each position in the thermal management component 31 is equal.

The above are merely preferred embodiments of the present application and are not intended to limit the present application. For those skilled in the art, various modifications and changes may be made to the present application. Any modification, equivalent replacement, or improvement made without departing from the spirit and principle of the present application shall fall within the protection scope of the present application.

**Claims**

1.  A heat exchange system, comprising:

    a thermal management component, comprising a first medium inlet and a medium outlet;
    a throttling apparatus, communicated with the first medium inlet;
    a first temperature sensor, configured to detect a temperature of a first heat exchange medium at the medium outlet; and
    a pressure sensor, configured to detect a pressure of the first heat exchange medium at the medium outlet,

wherein the throttling apparatus is configured to regulate a flow rate entering the first medium inlet in response to the first temperature sensor and the pressure sensor, to make the first heat exchange medium in the thermal management component in a gas-liquid mixed state.

2. The heat exchange system according to claim 1, wherein the heat exchange system further comprises a compressor and a condenser, the compressor, the condenser, the throttling apparatus, and the thermal management component forming a circulation loop.

3. The heat exchange system according to claim 2, wherein the heat exchange system comprises a heating system, the heating system being configured to heat the first heat exchange medium flowing out from the medium outlet.

4. The heat exchange system according to claim 3, wherein:

the condenser is communicated with the throttling apparatus by a first pipeline, and the thermal management component is communicated with the compressor by a second pipeline; and the heating system comprises a first heat exchanger, the first heat exchanger being connected to the first pipeline and the second pipeline, and the first heat exchanger being configured to achieve heat exchange between the first heat exchange medium in the first pipeline and the first heat exchange medium in the second pipeline.

5. The heat exchange system according to claim 3, wherein:

the thermal management component is communicated with the compressor by a second pipeline; and the heating system comprises a liquid supply system and a first heat exchanger, the liquid supply system being configured to supply a second heat exchange medium to the first heat exchanger, the first heat exchanger being connected to the second pipeline, and the first heat exchanger being configured to achieve heat exchange between the first heat exchange medium in the second pipeline and the second heat exchange medium.

6. The heat exchange system according to claim 5, wherein the liquid supply system comprises a medium storage and a driver, the medium storage being configured to store the second heat exchange medium, and the medium storage, the driver, and the first heat exchanger forming a circulation loop.

7. The heat exchange system according to claim 5 or 6, wherein the heating system further comprises a second heat exchanger, the second heat exchanger, the liquid supply system, and the first heat exchanger forming a circulation loop, and the second heat exchanger being configured to heat the second heat exchange medium.

8. The heat exchange system according to any one of claims 5 to 7, wherein:

the compressor comprises a second medium inlet, the second medium inlet being communicated with the medium outlet; and the heat exchange system further comprises a second temperature sensor, the second temperature sensor being configured to detect the temperature of the first heat exchange medium at the second medium inlet, and the liquid supply system being configured to regulate a flow rate of the second heat exchange medium passing through the first heat exchanger in response to the first temperature sensor and the second temperature sensor.

9. The heat exchange system according to any one of claims 3 to 7, wherein:

the compressor comprises a second medium inlet, the second medium inlet being communicated with the medium outlet; and the heat exchange system further comprises a second temperature sensor, the second temperature sensor being configured to detect the temperature of the first heat exchange medium at the second medium inlet, and the throttling apparatus being in response to the second temperature sensor.

10. A battery, comprising:

a battery cell;
a box body, accommodating the battery cell; and the heat exchange system according to any one of claims 1 to 9, the thermal management component being accommodated in the box body, and the thermal management component being configured to manage a temperature of the battery cell.

11. A control method, based on the heat exchange system according to any one of claims 1 to 9, the control method comprises:

when $T_1 > T_3$, regulating the throttling apparatus to increase the flow rate entering the first medium inlet, until $T_1 \leq T_3$,

$T_1$ being the temperature detected by the first temperature sensor, and $T_3$ being a corresponding saturation temperature of the first heat exchange medium at the pressure detected by the pressure sensor.

12. The control method according to claim 11, wherein:

the heat exchange system further comprises a compressor and a condenser, the compressor, the condenser, the throttling apparatus, and the thermal management component forming a circulation loop;

the heat exchange system comprises a heating system, the heating system being configured to heat the first heat exchange medium flowing out from the medium outlet;

the compressor comprises a second medium inlet, the second medium inlet being communicated with the medium outlet;

the heat exchange system further comprises a second temperature sensor, the second temperature sensor being configured to detect the temperature of the first heat exchange medium at the second medium inlet; and

the control method comprises:

when $T_1 \leq T_3$ and $T_2 - T_1 \leq T$, regulating the throttling apparatus to decrease the flow rate entering the first medium inlet, until $T_1 \leq T_3$ and $T_2 - T_1 > T$,

$T_2$ being a temperature detected by the second temperature sensor, and T being safe superheat at an inlet of the compressor.

13. The control method according to claim 11, wherein:

the heat exchange system further comprises a compressor and a condenser, the compressor, the condenser, the throttling apparatus, and the thermal management component forming a circulation loop;

the heat exchange system comprises a heating system, the heating system being configured to heat the first heat exchange medium flowing out from the medium outlet;

the thermal management component is communicated with the compressor by a second pipeline; the heating system comprises a liquid supply system and a first heat exchanger, the liquid supply system being configured to supply a second heat exchange medium to the first heat exchanger, the first heat exchanger being connected to the second pipeline, and the first heat exchanger being configured to achieve heat exchange between the first heat exchange medium in the second pipeline and the second heat exchange medium;

the compressor comprises a second medium inlet, the second medium inlet being communicated with the medium outlet;

the heat exchange system further comprises a second temperature sensor, the second temperature sensor being configured to detect the temperature of the first heat exchange medium at the second medium inlet; and

the control method comprises:

when $T_2 - T_1 \leq T$, regulating the liquid supply system to increase a flow rate of the second heat exchange medium supplied to the first heat exchanger, until $T_2 - T_1 > T$,

$T_2$ being the temperature detected by the second temperature sensor, and T being safe superheat at an inlet of the compressor.

14. The control method according to claim 13, wherein the liquid supply system comprises a medium storage and a driver, the medium storage being configured to store the second heat exchange medium, and the medium storage, the driver, and the first heat exchanger forming a circulation loop; and

the control method comprises:

when $T_2 - T_1 \leq T$, increasing a power of the driver to increase the flow rate of the second heat exchange medium supplied to the first heat exchanger.

15. The control method according to claim 13 or 14, comprising:

when $T_2 - T_1 > T + \Delta T$, regulating the liquid supply system to decrease the flow rate of the second heat exchange medium supplied to the first heat exchanger, until $T < T_2 - T_1 \leq T + \Delta T$, wherein

$$\Delta T = 6°C.$$

100

FIG. 1

30

FIG. 2

FIG. 3

FIG. 4

FIG. 5

FIG. 6

FIG. 7

FIG. 8

FIG. 9

## INTERNATIONAL SEARCH REPORT

| | International application No. |
|---|---|
| | **PCT/CN2023/130623** |

**A. CLASSIFICATION OF SUBJECT MATTER**

H01M10/613(2014.01)i; H01M10/615(2014.01)i; H01M10/6556(2014.01)i; H01M10/6569(2014.01)i

According to International Patent Classification (IPC) or to both national classification and IPC

**B. FIELDS SEARCHED**

Minimum documentation searched (classification system followed by classification symbols)

IPC:H01M10/-

Documentation searched other than minimum documentation to the extent that such documents are included in the fields searched

Electronic data base consulted during the international search (name of data base and, where practicable, search terms used)

CNTXT, ENTXTC, DWPI, CNKI: 电池, 换热器, 直冷板, 压缩机, 温度, 压力, 传感器, 节流, 膨胀阀, 制冷剂, 冷媒, battery, heat exchanger, compressor, sensor, temperature, pressure, expansion valve

**C. DOCUMENTS CONSIDERED TO BE RELEVANT**

| Category* | Citation of document, with indication, where appropriate, of the relevant passages | Relevant to claim No. |
|---|---|---|
| X | CN 114566732 A (GREAT WALL MOTOR CO., LTD.) 31 May 2022 (2022-05-31) description, paragraphs [0027]-[0048], and figure 1 | 1-9, 11-15 |
| Y | CN 114566732 A (GREAT WALL MOTOR CO., LTD.) 31 May 2022 (2022-05-31) description, paragraphs [0027]-[0048], and figure 1 | 10 |
| Y | CN 203386864 U (HUATING (CHANGZHOU) POWER TECHNOLOGY CO., LTD.) 08 January 2014 (2014-01-08) description, paragraphs [0006]-[0011] | 10 |
| A | CN 108110368 A (CHONGQING CHANGAN AUTOMOBILE CO., LTD. et al.) 01 June 2018 (2018-06-01) claims 1-10 | 1-15 |
| A | CN 108312866 A (NINGBO GUOCHUANG LOCOMOTIVE EQUIPMENT CO., LTD.) 24 July 2018 (2018-07-24) description, paragraphs [0033]-[0056] | 1-15 |
| A | CN 116014286 A (HUAJIAN NEW ENERGY TECHNOLOGY (SHANGHAI) CO., LTD.) 25 April 2023 (2023-04-25) claims 1-10 | 1-15 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 January 2024** | **16 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/130623**

### C.    DOCUMENTS CONSIDERED TO BE RELEVANT

| Category* | Citation of document, with indication, where appropriate, of the relevant passages | Relevant to claim No. |
|---|---|---|
| A | US 2023070430 A1 (TOYOTA MOTOR CO., LTD.) 09 March 2023 (2023-03-09) claims 1-10 | 1-15 |

**INTERNATIONAL SEARCH REPORT**
Information on patent family members

International application No.

**PCT/CN2023/130623**

| Patent document cited in search report | | | Publication date (day/month/year) | Patent family member(s) | | | Publication date (day/month/year) |
|---|---|---|---|---|---|---|---|
| CN | 114566732 | A | 31 May 2022 | None | | | |
| CN | 203386864 | U | 08 January 2014 | None | | | |
| CN | 108110368 | A | 01 June 2018 | None | | | |
| CN | 108312866 | A | 24 July 2018 | None | | | |
| CN | 116014286 | A | 25 April 2023 | None | | | |
| US | 2023070430 | A1 | 09 March 2023 | JP | 2023037294 | A | 15 March 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023105516519